# EUROPÄISCHE PATENTSCHRIFT

(11) **EP 3 819 167 B1**
(45) Veröffentlichungstag und Bekanntmachung des Hinweises auf die Patenterteilung: **07.06.2023**
(21) Anmeldenummer: 19207341.9
(22) Anmeldetag: 06.11.2019
(51) Int. Cl.: B60P 1/44

(54) **LASTENHEBEVORRICHTUNG**
LOAD LIFTING DEVICE
DISPOSITIF DE LEVAGE DE CHARGES

(43) Veröffentlichungstag der Anmeldung: 12.05.2021
(73) Patentinhaber: Schmid, Felix, 8280 Kreuzlingen (CH)
(72) Erfinder: Schmid, Felix, 8280 Kreuzlingen (CH)
(74) Vertreter: Schaad, Balass, Menzl & Partner AG

(56) Entgegenhaltungen:
- EP-A1- 0 359 600
- DE-U1-202004 004 127
- FR-A1- 2 245 499
- FR-A1- 2 438 008

## Beschreibung

Die Erfindung betrifft eine Lastenhebevorrichtung zur Montage an einem Fahrzeug gemäss Anspruch 1 sowie ein Fahrzeug mit einer entsprechenden Lastenhebevorrichtung gemäss Anspruch 15.

Lastenhebevorrichtungen zum Be- und Entladen eines Fahrzeuges sind in verschiedenen Ausführungsformen bekannt, die an die Art der Ladung und Grösse des tragenden Fahrzeuges angepasst sind. Beispielsweise bedingen Lastenhebevorrichtungen für Lastkraftwagen (LKWs) eine hohe Lasttragefähigkeit und müssen entsprechend gross und stabil ausgestaltet sein. Dies geht wiederum mit einem höheren Eigengewicht und erhöhtem Raumbedarf der Lastenhebevorrichtung einher. Lastenhebevorrichtungen für Kleintransporter unterscheiden sich von jenen für LKWs meist nur durch eine geringere Lasttragefähigkeit sowie geringere Dimensionen und ein damit einhergehendes geringeres Eigengewicht. Insgesamt ist der Aufbau von Lastenhebevorrichtungen für beide Fahrzeugtypen aber in der Regel weitestgehend der gleiche. Unabhängig vom Fahrzeugtyp bzw. der Dimension der Lastenhebevorrichtung sind die gängigen Lastenhebevorrichtungen so konstruiert, dass sie nach dem Anheben der Last keinen Kontakt zum Untergrund mehr aufweisen. Dies hat zur Folge, dass das Gewicht der angehobenen Last vollständig vom Fahrzeug getragen werden muss. Je nach Gewicht und Positionierung der Last auf der Lastenhebevorrichtung kann dies für das Fahrzeug oder die Aufhängung bzw. Verbindung zwischen Lastenhebevorrichtung und Fahrzeug eine erhebliche Belastung darstellen. Dieser Nachteil macht sich insbesondere bei Kleintransporter bemerkbar, welche im Normalfall nur über eine Hinterachse verfügen. FR 2 438 008 A1 offenbart den Oberbegriff von Anspruch 1.

Es ist daher die Aufgabe der vorliegenden Erfindung, eine Lastenhebevorrichtung für ein Fahrzeug bereitzustellen, bei welcher die auf das Fahrzeug und/oder die Aufhängung der Lastenhebevorrichtung wirkenden Kräfte reduziert werden können. Ausserdem soll die Lastenhebevorrichtung eine einfache Montage an verschiedenen Fahrzeugtypen erlauben.

Diese Aufgabe wird erfindungsgemäss mit einer Lastenhebevorrichtung gemäss Anspruch 1 gelöst. Bevorzugte Ausführungsformen der Erfindung sind in den abhängigen Ansprüchen wiedergegeben.

Die Erfindung betrifft eine Lastenhebevorrichtung zur Montage an einem Anlenkendbereich eines Fahrzeugs. Die Lastenhebevorrichtung umfasst erfindungsgemäss eine Plattform, einen Anlenkhebel, ein Stützelement, ein Antriebselement und ein Verbindungselement.

Die Plattform dient der Aufnahme einer Last und weist üblicherweise eine Längsachse auf, welche sich ausgehend von einem Anlenkendbereich des Fahrzeugs zugewandten ersten Ende zu einem dem ersten Ende gegenüberliegenden und von diesem beabstandeten zweiten Ende hin erstreckt. Entsprechend umfasst die Plattform üblicherweise eine Querachse, welche sich in der Ebene der Plattform rechtwinklig zur Längsachse erstreckt. Die Plattform weist ausserdem in der Regel eine bevorzugt ebene Oberfläche auf, welche sich in Längs- und Querrichtung erstreckt.

Der Anlenkhebel ist erfindungsgemäss an der Plattform schwenkbar gelagert und am Anlenkendbereich des Fahrzeugs angelenkt. Die Anlenkung des Anlenkhebels an der Plattform A22886EP/06.11.2019 erfolgt an mindestens einem Anlenkpunkt und die Schwenkachse verläuft in der Regel in Querrichtung der Plattform durch besagten Anlenkpunkt. In der Regel umfasst der Anlenkhebel einen ersten Endbereich, welcher am Fahrzeug angelenkt ist und mindestens einen weiteren vom ersten Endbereich beabstandeten zweiten Endbereich.

Das Stützelement ist gelenkig oder starr mit der Plattform verbunden und umfasst ein Fussende, welches zur Abstützung auf einem Untergrund vorgesehen ist. Bevorzugt erfolgt die Verbindung des Stützelements mit der Plattform über ein dem Fussende gegenüberliegendes Verbindungsende.

Im Fall einer gelenkigen Verbindung des Stützelements mit der Plattform umfasst letztere somit bevorzugt mindestens zwei Anlenkpunkte; den ersten Anlenkpunkt zur Anlenkung des Anlenkhebels (welcher auch bei einer starren Verbindung des Stützelements mit der Plattform vorhanden ist) und einen zweiten Anlenkpunkt zur Anlenkung des Stützelements. Der erste Anlenkpunkt befindet sich dabei bevorzugt im Bereich des ersten Endes der Plattform und der zweite Anlenkpunkt ist bevorzugt in Längsrichtung und in Richtung des zweiten Endes der Plattform gesehen vom ersten Anlenkpunkt beabstandet.

Das Verbindungselement ist erfindungsgemäss einerseits mit dem Anlenkhebel und andererseits mit dem Stützelement verbunden und dient zur Steuerung der Drehlage des Anlenkhebels und der Schwenkposition der Plattform in Abhängigkeit vom Stützelement. Der Begriff "Drehlage des Anlenkhebels" beschreibt somit die Positionierung des Anlenkhebels in Relation zum Fahrzeug und zur Plattform.

Als Schwenkposition ist dabei die Position des zweiten Endes der Plattform in Relation zum ersten Ende der Plattform definiert, wenn die Plattform um eine Schwenkachse bewegt worden ist. Die Schwenkachse verläuft dabei in der Regel annähernd parallel zur Querrichtung und durch den ersten Anlenkpunkt der Plattform.

Erfindungsgemäss kann die Plattform von einer abgesenkten Ruheposition in eine angehobene Arbeitsposition und wieder zurückgebracht werden. Das Anheben der Plattform von der Ruheposition in die Arbeitsposition erfolgt mithilfe des Antriebselements.

Konkret ist das Antriebselement erfindungsgemäss dazu bestimmt, das Stützelement aus einer der Ruheposition der Plattform zugeordneten Ruhelage in eine Arbeitslage, in welcher das Fussende auf dem Untergrund abgestützt und die Plattform in die Arbeitsposition angehoben ist, zu verbringen. Die Ruheposition ist definiert insofern die Position, in der die Plattform einen möglichst geringen Abstand zum Untergrund aufweist und bevorzugt selbst auf dem Untergrund aufliegt, um das Aufladen einer Last zu erleichtern.

In der Ruheposition der Plattform befindet sich das Stützelement in einer Ruhelage. In besagter Ruhelage kann das Stützelement mit dem Untergrund in Kontakt sein, wie weiter unten noch im Detail ausgeführt, sind aber auch Ausführungsformen denkbar, wo das Stützelement in der Ruhelage keinen Kontakt zum Untergrund hat - beispielsweise indem es teleskopartig eingezogen und/oder in einer Ausnehmung der Plattform untergebracht ist.

In der Arbeitsposition ist die Plattform zumindest bereichsweise vom Untergrund beabstandet, wobei der Abstand der Plattform vom Untergrund in der Arbeitsposition auf jeden Fall grösser ist als in der Ruheposition.

Bevorzugt ist in der Arbeitsposition zumindest der die Last tragende Teil der Plattform annähernd parallel zur Längsachse eines Fahrzeuges und auf Höhe einer Unterkante einer Ladeöffnung des Fahrzeuges angeordnet.

In der Arbeitsposition der Plattform befindet sich das Stützelement in der Arbeitslage. Letztere ist dadurch definiert, dass sich das Fussende des Stützelements in Kontakt mit dem Untergrund befindet und weiter von der Plattform beabstandet ist als in der Ruhelage.

Ein Verschwenken der Plattform ist vorzugsweise sowohl aus der Ruheposition als auch aus der Arbeitsposition möglich.

Die erfindungsgemässe Lastenhebevorrichtung hat gegenüber dem Stand der Technik den Vorteil, dass zumindest ein Teil der auf das Fahrzeug und/oder die Aufhängung wirkenden Last (durch das Eigengewicht der Lastenhebevorrichtung und durch eine von ihr getragenen Last) über das Stützelement auf den Untergrund übertragen bzw. auf diesem abgestützt werden kann. Dank der Abstützung des Stützelements auf dem Untergrund kann die Gefahr, dass das Fahrzeug heckseitig überlastet wird, deutlich minimiert werden.

Bevorzugt handelt es sich bei dem Anlenkhebel um einen geraden Hebelarm, einen Winkelhebel oder eine Wippe.

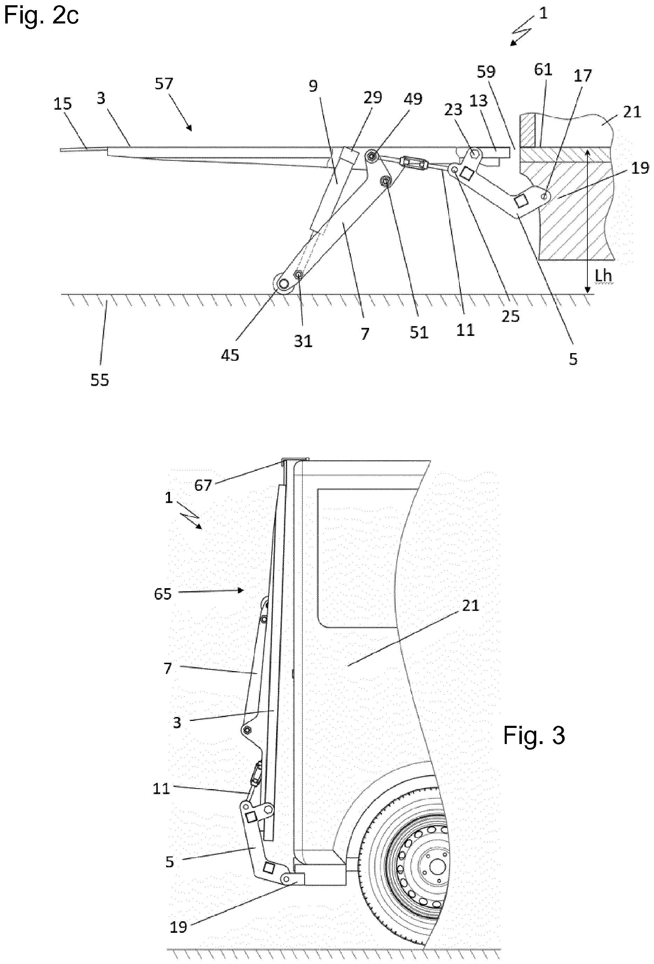

Der Anlenkhebel ist bevorzugt an die Fahrzeug-Geometrie angepasst. Als Fahrzeug-Geometrie ist die Ausrichtung, Lage und Dimension des Fahrzeugs und im Speziellen von am Fahrzeug befestigten Teilen, wie einer Heckladeklappe, Stossstange, Kotflügel, Heckverkleidung, Anhängerkupplungsaufhängung und/oder Anhängerkupplungsrahmen, definiert. Durch die Anpassung der Form des Anlenkhebels an die Fahrzeug-Geometrie ist es möglich, die Plattform in der Arbeitsposition nahe am Fahrzeug zu positionieren, so dass im Wesentlichen ein nahtloser Übergang von der Plattform zum Fahrzeug - insbesondere dessen Ladefläche - realisiert werden kann. Der Hebelarm kann beispielsweise so ausgestaltet sein, dass er in der Arbeitsposition der Plattform eine Brücke schafft zwischen Plattform in der Arbeitsposition und Ladefläche des Fahrzeugs, so dass eine auf Rollen gelagerte Last von der Plattform über den Anlenkhebel auf die Ladefläche des Fahrzeugs gerollt werden kann. Ausserdem wird durch die Anpassung der Form des Anlenkhebels an die Fahrzeug-Geometrie ein Verschwenken der Plattform um eine in Querrichtung verlaufende Schwenkachse ermöglicht, so dass die Plattform in eine bevorzugt wenigstens annähernd rechtwinklig zur Arbeitsposition ausgerichtete Transportposition verschwenkt werden kann. Auf die bevorzugte Verschwenkbarkeit der Plattform in die Transportposition wird weiter unten und im Zusammenhang mit Figur 3 noch im Detail eingegangen werden.

In einer bevorzugten Ausführungsform der Lastenhebevorrichtung ist der Anlenkhebel als Torsionsrahmen ausgebildet. Besagter Torsionsrahmen ist dabei bevorzugt durch mehrere zueinander parallel verlaufende und miteinander verbundene Anlenkhebel gebildet. Bei Ausbildung des Anlenkhebels als Torsionsrahmen wird die Stabilität der Vorrichtung in Querrichtung der Plattform erhöht, sodass ein Kippen der Plattform (um eine in Längsrichtung verlaufende Kippachse) auch bei einseitiger Beladung verhindert werden kann. Ausserdem hat die Verwendung eines Torsionsrahmens den Vorteil, dass ein einzelnes Stützelement ausreichend ist, bzw. dass die Kippstabilität der Plattform nicht über zwei oder mehr Stützelemente gewährleistet werden muss.

Alternativ kann der Anlenkhebel aber auch in Form von nur einem verdrehsteif ausgebildeten Hebelarm ausgebildet sein.

In einer weiteren bevorzugten Ausführungsform der Lastenhebevorrichtung ist das Stützelement gelenkig und besonders bevorzugt schwenkbar mit der Plattform verbunden. Eine gelenkige Verbindung zwischen dem Stützelement und der Plattform ermöglicht insbesondere ein Verschwenken des Stützelements aus einer annähernd parallel zur Plattform ausgerichteten Ruhelage in die Arbeitslage. In der Ruhelage ist das Stützelement somit bevorzugt an der Plattform anliegend oder innerhalb der Plattform untergebracht und ermöglicht eine untergrundnahe Positionierung der Plattform in ihrer Ruheposition. Ausserdem erlaubt eine gelenkige Verbindung zwischen Stützelement und Plattform, dass das Stützelement auch während des Anhebens oder Absenkens der Plattform mit dem Untergrund in Kontakt bleibt und so seine Stützfunktion auch beim Wechsel der Plattform von der Ruheposition in die Arbeitsposition und zurück ausüben kann.

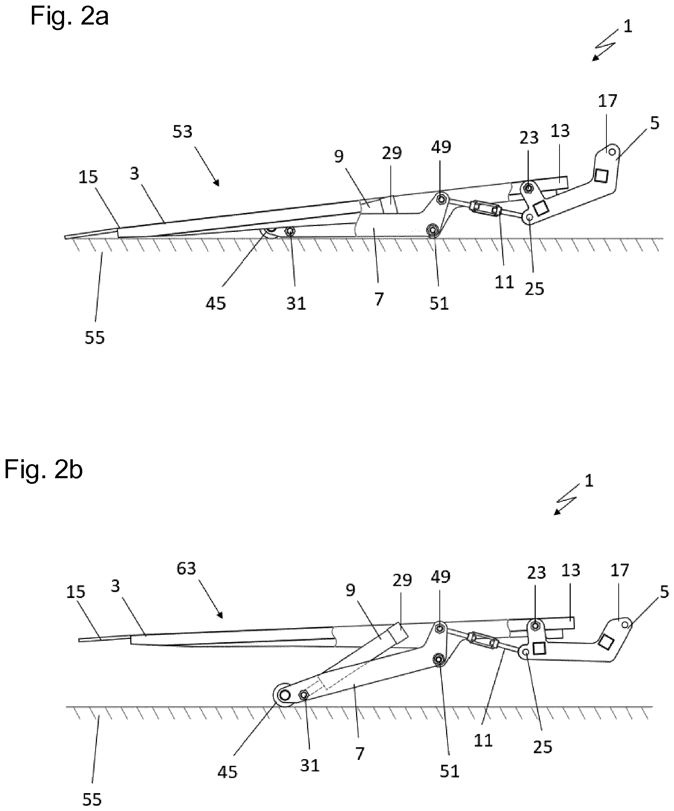

Bevorzugt kreuzt das Verbindungselement eine Gerade zwischen einem ersten Anlenkpunkt der Plattform am Anlenkhebel und einem zweiten Anlenkpunkt der Plattform am Stützelement. Diese bevorzugte Anordnung des Verbindungselements in Bezug auf die Anlenkpunkte der Plattform an Anlenkhebel bzw. am Stützelement ist in Fig. 2a ersichtlich.

Bevorzugt ist das Verbindungselement dabei als starre Verbindung ohne Gelenk oder als Verbindung mit einem Mehrfachgelenk ausgebildet. Eine Verbindung mit einem Mehrfachgelenk kann beispielsweise in Form einer 3- oder mehrgliedrigen Kette realisiert sein.

Im Hinblick auf eine gleichmässige Kraftübertragung ist das Verbindungselement besonders bevorzugt druck- und/oder zugstabil ausgebildet. Unabhängig davon ist das Verbindungselement vorzugsweise längenverstellbar ausgebildet. Konkrete Beispiele von bevorzugten Verbindungselementen sind etwa ein hydraulischer Zylinder; ein Spannschloss oder eine Spannschraube; oder ein Getriebe, insbesondere Spindelgetriebe.

Wie weiter oben beschrieben ist das Verbindungselement an entsprechenden Verbindungs- oder Anlenkpunkten einerseits mit dem Anlenkhebel und andererseits mit dem Stützelement verbunden. Durch Verändern der Position der Verbindungspunkte und/oder der Länge des Verbindungselements lässt sich die Bewegung der Plattform bzw. deren Position steuern. Befindet sich die Plattform beispielsweise in einer ausgehend vom Fahrzeug abfallenden Ruheposition, in welcher Sie mit einem (horizontalen) Untergrund einen Winkel einschliesst, so wird das vom Fahrzeug weiter entfernte Ende der Plattform bevorzugt zunächst leicht angehoben, sodass die Plattform annähernd horizontal ausgerichtet ist und anschliessend als Ganzes im Wesentlichen parallel zur horizontalen Ausrichtung weiter angehoben, bis sie ihre Arbeitsposition erreicht. Um ein Einladen von Lasten in das Fahrzeug zu erleichtern, kann die Plattform auch leicht überkippt werden, sodass das vom Fahrzeug weiter entfernte Ende der Plattform leicht höher liegt, als das näher am Fahrzeug befindliche Ende der Plattform.

In einer weiteren bevorzugten Ausführungsform der Lastenhebevorrichtung ist das Fussende des Stützelementes als Rolle ausgebildet ist. Alternativ kann das Fussende des Stützelementes auch eine Gleitfläche aufweisen, welcher über den Untergrund oder eine eigens dafür ausgelegte stabile Unterlage, beispielsweise ein Holzbrett, gleitet. Die Verwendung einer Rolle oder einer Gleitfläche ermöglicht den Einsatz der Lastenhebevorrichtung unabhängig von der Beschaffenheit und Ausrichtung des Untergrunds. Insbesondere in Kombination mit einer gelenkigen Verbindung des Stützelements und der Plattform kann das Stützelement beim Wechsel zwischen seiner Ruhelage und seiner Arbeitslage mit seinem Fussende über den Untergrund rollen bzw. gleiten.

Bevorzugt umfasst die Lastenhebevorrichtung lediglich ein Stützelement. Die Verwendung von nur einem Stützelement ermöglicht eine leichte Bauweise der Lastenhebevorrichtung. Dies wiederum ermöglicht es die Lastenhebevorrichtung permanent am Fahrzeug befestigt zu lassen, ohne dass dabei der Treibstoffverbrauch des Fahrzeugs über Gebühr steigt oder die für die Zuladung verfügbare Nutzlast des Fahrzeugs signifikant vermindert wird. Ausserdem ermöglicht eine leichte Bauweise der Lastenhebevorrichtung, dass diese auch von Hand hochgeklappt oder demontiert werden kann. Nach der Demontage ist es möglich die Lastenhebevorrichtung vor Ort zu deponieren oder im Fahrzeug zu transportieren.

In einer weiteren bevorzugten Ausführungsform der Lastenhebevorrichtung ist das Antriebselement als hydraulischer Zylinder, pneumatischer Zylinder oder als ein Getriebe, insbesondere als Spindelgetriebe ausgebildet. Die Wahl des Antriebselements erfolgt vorzugsweise in Abhängigkeit des Fahrzeugtyps. Beispielsweise ist die Verwendung eines pneumatischen oder hydraulischen Zylinders besonders dann zweckmässig, wenn die Lastenhebevorrichtung an einen bereits bestehenden pneumatischen oder hydraulischen Kreislauf angeschossen werden kann. Wenn das Antriebselement als Getriebe ausgebildet ist, wird dieses bevorzugt mit einem Elektromotor gekoppelt, welcher über einen vorhandenen Stromkreislauf gespiesen wird. Sollte am Fahrzeug kein entsprechender Kreislauf vorhanden sein, kann die Lastenhebevorrichtung, bzw. das Antriebselement, ohne Weiteres auch an eine externe (separat im Fahrzeug eingebaute) pneumatische, hydraulische oder elektrische Versorgung angeschlossen werden.

Bevorzugt treibt das Antriebselement das Stützelement und/oder den Anlenkhebel an. Der Begriff "Antreiben" umfasst hierbei auch ein indirektes Antreiben des Stützelements bzw. des Anlenkhebels.

In einer beispielhaften Ausführungsform ist das Verbindungselement im Hinblick auf ein indirektes Antreiben des Anlenkhebels starr sowie zug- und druckstabil ausgebildet. Wird nun mithilfe des Antriebselement die Position des Stützelements verändert (also das Stützelement aktiv vom Antriebselement angetrieben), so bewirkt die direkte Positionsänderung des Stützelements auch eine indirekte Änderung der Drehlage des Anlenkhebels und/oder der Schwenkposition der Plattform.

Da die Hauptlast in der Regel auf dem Stützelement liegt, ist ein Antreiben des Stützelements besonders bevorzugt. Je nach Art des Antriebselements, z.B. Getriebeart, oder bei einer sehr niedrigen Bauweise der Lastenhebevorrichtung (etwa bei bodennaher Aufhängung am Fahrzeug) kann aber auch ein Antreiben des Anlenkhebels zweckmässig sein.

Ist das Verbindungselement längenverstellbar ausgebildet, so kann ein zusätzliches Antriebselement vorhanden sein, das die Länge des Verbindungselements verändert. Da das Verbindungselement erfindungsgemäss sowohl mit dem Anlenkhebel als auch mit dem Stützelement verbunden ist und der Anlenkhebel sowie das Stützelement beide wiederum jeweils mit der Plattform verbunden sind, kann durch Ändern der Länge des Verbindungselement die Ausrichtung des Anlenkhebels und des Stützelements und damit auch die Schwenkposition der Plattform verändert, z.B. feinjustiert, werden.

In einer weiteren bevorzugten Ausführungsform der Lastenhebevorrichtung ist der Anlenkendbereich am Fahrzeug als Anhängerkupplungsrahmen ausgebildet. Eine Montage der Lastenhebevorrichtung an der Anhängerkupplung oder anderen bereits bestehenden Fahrzeugstrukturen ist aus Kostensicht besonders vorteilhaft, da so auf die Anschaffung spezieller Befestigungsvorrichtungen verzichtet werden kann. Die Montage an einem Anhängerkupplungsrahmen ermöglicht dank der genormten Dimensionen und Belastungsvorgaben für Anhängerkupplungen ausserdem eine besonders einfache Befestigung der Lastenhebevorrichtung an verschiedensten Fahrzeugklassen und Fahrzeugtypen.

Nichtsdestotrotz kann die Lastenhebevorrichtung auch anderweitig am Fahrzeug befestigt werden, solange die tragende Struktur eine entsprechende Nutzung zulässt.

Wie weiter oben erwähnt, kann die Verbindung zwischen Fahrzeug und Lastenhebevorrichtung vorzugsweise einfach gelöst werden. So kann die Lastenhebevorrichtung bei Nichtgebrauch im Fahrzeug mittransportiert oder demontiert werden. Dazu ist die Befestigung am Fahrzeug bevorzugt als Scharnier, insbesondere als Slip-Joint-Flaggen-Scharnier, Steckscharnier oder Klavierscharnier ausgebildet, welche eine rasche Montage und Demontage erlauben.

Bevorzugt ist die Lastenhebevorrichtung so ausgebildet, dass die Plattform in eine wenigstens annähernd vertikal zur Arbeitsposition liegende Transportposition verbringbar ist. Besonders bevorzugt wird die Plattform dabei um eine in Querrichtung verlaufende Schwenkachse geschwenkt, so dass die Plattform in der Transportposition wenigstens annähernd rechtwinklig zur Ebene des Fahrzeugs-Chassis angeordnet ist. In dieser Position kann die Plattform platzsparend am Fahrzeug fixiert werden, was ihren Transport erleichtert und den Treibstoffverbrauch des Fahrzeugs senkt. Vorzugsweise kann die Plattform in der Transportposition im Bereich des zweiten Endes der Plattform mittels einer Fixiervorrichtung am Fahrzeug fixiert werden. Die Befestigung am Fahrzeug kann beispielsweise mittels eines Seils oder einem Spanngurt erfolgen. Alternativ kann an der Plattform eine Lasche vorhanden sein, die an einem Haken am Fahrzeug befestigt werden kann. Weiter kann die Plattform oder das Fahrzeug eine vorstehende Rastnase aufweisen, die in der Transportposition der Plattform in ein am Fahrzeug oder an der Plattform vorhandenes Aufnahmeelement eingreifen und lösbar verrastet werden kann. Um Beschädigungen am Fahrzeug entgegenzuwirken können an potenziellen Anlagestellen entsprechende Dämpfungselemente angebracht sein.

Um die Plattform aus der Arbeitsposition in die Transportposition zu verbringen, können entsprechende Antriebsmittel, z.B. eine Zug- oder Druckvorrichtung, vorgesehen sein. Alternativ kann die Plattform auch manuell in die Transportposition verschwenkt werden und nach Lösen des Fixiermittels durch Ausnutzung der Schwerkraft zurück in die Arbeitsposition gebracht werden.

In einer weiteren bevorzugten Ausführungsform sind zumindest die Rahmenelemente und/oder lastentragenden Teile der Lastenhebevorrichtung einem Material gefertigt, das aus der Gruppe bestehend aus Metall, insbesondere Stahl, Aluminium oder Inox-Chromstahl; Holz; Kohlenstoffverbundstoffe; Glasfaserverbundstoffe; Kunststoffe und Mischungen ausgewählt ist. Im Hinblick auf eine hohe Beschädigungstoleranz und einfache Reparaturmöglichkeit sind zumindest die lastentragenden Teile der Lastenhebevorrichtung bevorzugt aus Metall oder einer Metalllegierung gefertigt.

Die Verwendung von Leichtmetallen, Kohlenstoffverbundstoffen, Glasfaserverbundstoffen und Kunststoffen ermöglicht eine besonders leichte Bauweise der Lastenhebevorrichtung und ist insbesondere im Hinblick auf die Montage an einem leichteren Fahrzeug vorteilhaft. Aus Kostensicht und geringerer Splittergefahr bei Beschädigung sind Leichtmetalle bevorzugt.

Was den strukturellen Aufbau der Plattform betrifft, so umfasst diese bevorzugt eine Aussparung zur Aufnahme des Stützelements. Die Aussparung ermöglicht es, das Stützelement teilweise oder vollständig in die Plattform zu versenken, sodass in der Ruheposition der Plattform die Unterseite der Lastenhebevorrichtung möglichst flächig auf einem ebenen Untergrund aufliegen kann. Dies erleichtert das Be- und Entladen der Plattform, etwa mit Lasten auf Rollen. Ausserdem wird eine kompakte Bauweise der Plattform ermöglicht. Im Hinblick auf eine möglichst platzsparende Ausgestaltung ist ferner bevorzugt, dass die Plattform aus mehreren Teilen besteht, welche einfach de-/montiert oder beispielsweise über Scharniere mit einander verbunden platzsparend aufeinander angeordnet werden können. So kann die Grösse der Plattform je nach Bedarf angepasst werden. Besonders bevorzugt kann durch Demontage oder Einklappen einzelner Randelemente der Plattform die Ausdehnung der Lastenhebevorrichtung in der Transportposition in Quer- sowie in Längsrichtung verringert werden.

In einer weiteren bevorzugten Ausführungsform der Lastenhebevorrichtung ist diese so ausgebildet das sie eine Nutzlast von mindestens 80 kg, bevorzugt 200 kg bewegen kann. Bei dieser Ausführungsform besteht ein Vorteil der Lastenhebevorrichtung insbesondere darin, dass sie eine Last anheben kann, welche die maximale Zuladung eines Kleintransporters überschreitet. Dank des erfindungsgemässen Aufbaus der Lastenhebevorrichtung wird eine auf der Plattform befindliche Last vermehrt, vorzugsweise grösstenteils, von der Lastenhebevorrichtung selber getragen und nur zu einem möglichst geringen Teil auf das Fahrzeug übertragen.

Bevorzugt weist die Lastenhebevorrichtung dabei ein Eigengewicht von 20 bis 200 kg, bevorzugt 25 bis 150 kg und besonders bevorzugt 30 bis 80 kg auf. Das geringe Eigengewicht ermöglicht, dass die Lastenhebevorrichtung problemlos von ein bis zwei Personen demontiert und gegebenenfalls getragen werden kann.

Bevorzugt sind der Anlenkhebel, die Plattform, der Stützelement und das Verbindungselement so mit einander verbunden, dass die Plattform aus der Ruheposition in die Arbeitsposition wenigstens annähernd parallel zur einer Fahrzeuglängsachse verschoben wird. Die Plattform bewegt sich dabei bevorzugt parallel zur Ebene des Fahrzeugs-Chassis. Dies ermöglicht es, auch auf Rollen oder Rädern gelagerte Lasten anzuheben, ohne dass diese beim Anheben/Senken der Plattform zu stark in Bewegung geraten und dabei von der Plattform rollen.

Bevorzugt bildet das Stützelement beim Anheben der Plattform aus der Ruheposition in die Arbeitsposition mit der Längsachse der Plattform stets einen spitzen Winkel, wobei der Winkel beim Anheben der Plattform zunimmt. Dies setzt eine gelenkige Verbindung zwischen Stützelement und Plattform voraus. Wie oben beschrieben umfasst die Plattform bei dieser Ausführungsform besonders bevorzugt umfasst eine untenseitige Ausnehmung, in welche das Stützelement in seiner Ruhelage aufgenommen bzw. eingeschwenkt werden kann.

Die Erfindung betrifft ebenfalls ein Fahrzeug mit einer oben beschriebenen Lastenhebevorrichtung.

Im Folgenden wird die Erfindung anhand einiger in den Figuren dargestellten Ausführungsbeispielen näher erläutert. Wenn alternative Ausführungsformen sich nur in einzelnen Merkmalen unterscheiden, wurden für die gleichbleibenden Merkmale jeweils dieselben Bezugszeichen verwendet. Es zeigen jeweils rein schematisch:
- Fig. 1a: eine perspektivische Draufsicht einer erfindungsgemässen Lastenhebevorrichtung in einer Ruheposition;
- Fig. 1b: eine perspektivische Draufsicht der Lastenhebevorrichtung aus Fig. 1a im Übergang zwischen der Ruheposition und einer Arbeitsposition;
- Fig. 1c: eine perspektivische Draufsicht der Lastenhebevorrichtung aus Fig. 1b in der Arbeitsposition;
- Fig. 1d: eine perspektivische Ansicht von Unten der Lastenhebevorrichtung aus Fig. 1a in der Ruheposition;
- Fig. 2a: eine Seitenansicht der Lastenhebevorrichtung aus Fig. 1a in der Ruheposition;
- Fig. 2b: eine Seitenansicht der Lastenhebevorrichtung aus Fig. 1b im Übergang zwischen der Ruheposition und der Arbeitsposition;
- Fig. 2c: eine Seitenansicht der Lastenhebevorrichtung aus Fig. 1c in der Arbeitsposition; und
- Fig. 3: eine Seitenansicht der Lastenhebevorrichtung aus Fig. 1a in einer Transportposition.

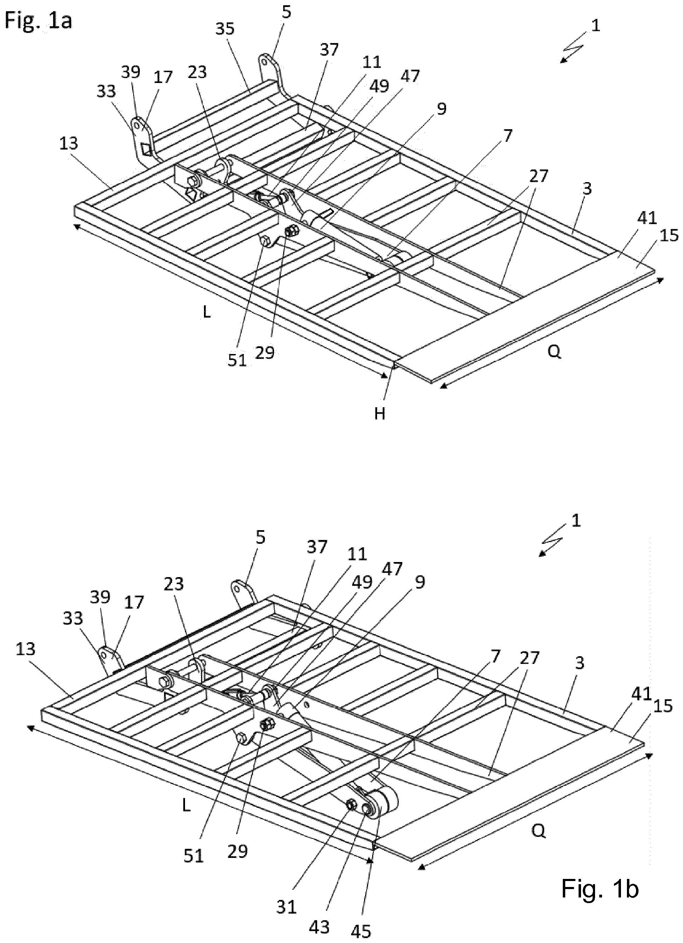

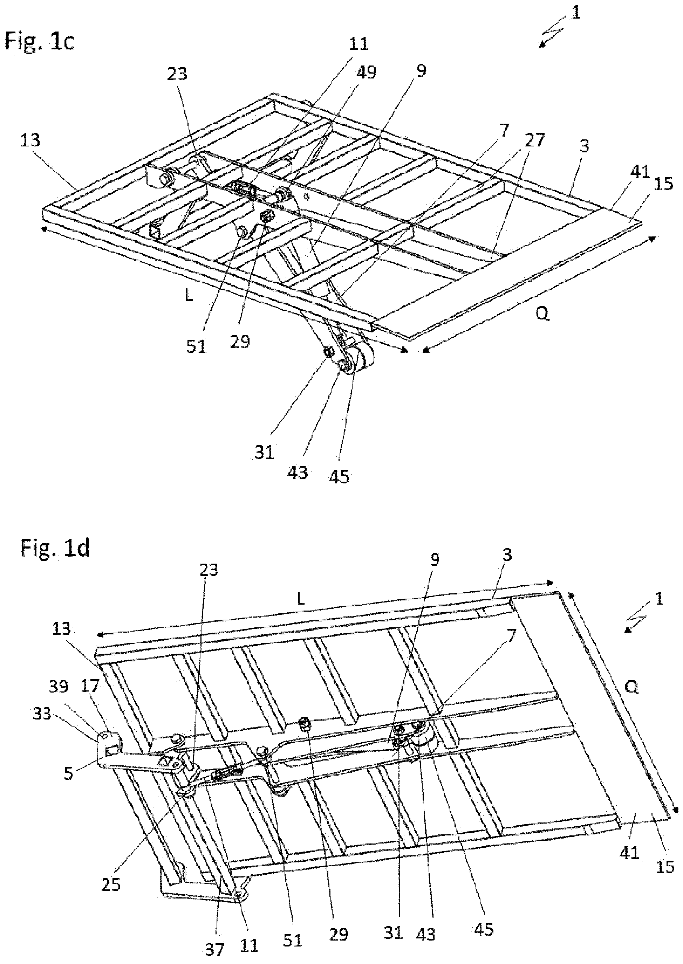

Die in Fig. 1a bis 1d abgebildete erfindungsgemässe Lastenhebevorrichtung 1 umfasst eine Plattform 3, einen Anlenkhebel 5, ein Stützelement 7, ein Antriebselement 9 und ein Verbindungselement 11. Die Plattform 3 umfasst eine geschlossene Oberfläche, welche zum besseren Verständnis in den Figuren 1a bis 1c nicht dargestellt ist. Die Plattform 3 umfasst ein erstes Ende 13 und ein vom ersten Ende 13 beabstandetes zweites Ende 15 sowie eine Längsachse L und eine dazu rechtwinklig verlaufende Querachse Q. Der Anlenkhebel 5 umfasst einem ersten Endbereich 17, welcher an einem Anlenkendbereich 19 eines Fahrzeugs 21 (siehe Fig. 3) angelenkt ist. Der Anlenkhebel 5 umfasst einen zweiten Endbereich 23 und einen dritten Endbereich 25 (siehe Fig. 2a), welche beide vom ersten Endbereich 17 beabstandet sind. Über den zweiten Endbereich 23 ist der Anlenkhebel 5 mit der Plattform 3 gelenkig verbunden und über den dritten Anlenkbereich 25 ist der Anlenkhebel 5 mit dem Verbindungselement 11 gelenkig verbunden. Zur besseren Lastenverteilung umfasst die Plattform 3 Verstrebungen 27 in Längs- und Querrichtung L, Q der Plattform 3. Das Antriebselement 9 ist über Verbindungsmittel 29, 31 einerseits mit der Plattform 3 und andererseits mit dem Stützelement 7 verbunden. Die Verbindungsmittel 29, 31 können beispielsweise als durchgehende Bolzen ausgebildet sein, die vorzugsweise das Antriebselement 9 sowie die Plattform bzw. das Stützelement an den entsprechenden Anlenk- oder Verbindungspunkten durchgreifen.

Der Anlenkhebel 5 ist in der dargestellten Ausführungsform als Torsionsrahmen 33 mit einer oder mehreren Querverstrebung(en) 35, 37 ausgebildet. Es ist jedoch ebenfalls denkbar, dass der Anlenkhebel 5 nur aus einem Hebelarm 39 besteht und dabei der erste Anlenkbereich 17 verdrehstabil ausgebildet ist. Des Weiteren ist der Anlenkhebel 5 in der gezeigten Ausführungsform in Querrichtung Q gesehen nicht mittig an der Plattform 3 befestigt. Dies hängt mit der Art des Fahrzeugs, an dem die Plattform befestigt wird, zusammen und kann beliebig geändert werden. Es ist insbesondere denkbar, dass der Anlenkhebel 5 in Querrichtung Q wesentlich schmaler ausgebildet ist als die Plattform 3 und entweder mittig, seitlich oder in jeder dazwischenliegenden Position angebracht ist. Es ist ebenfalls denkbar, dass der Anlenkhebel 5 eine in Querrichtung Q dieselbe Breite aufweist, wie die Plattform 3.

Die Plattform 3 umfasst ferner eine Rampe 41, um eine Profilhöhe H der Plattform 3 zu überbrücken. Das Stützelement 7 umfasst ein von der Plattform abgewandtes Fussende 43 mit einer Rolle 45 sowie ein dem Fussende gegenüberliegendes Verbindungsende 47. Das Verbindungsende 47 umfasst zwei Anlenkpunkte 49, 51 an welchen das Verbindungselement 11 und die Plattform 3 mit dem Stützelement 7 verbunden sind.

Die Figuren 2a bis 2c zeigen die erfindungsgemässe Lastenhebevorrichtung 1 in einer Ruheposition 53, wobei zu besseren Sichtbarkeit der Verbindung von Anlenkhebel 5, Plattform 3, Stützelement 7 und Verbindungselement 11, die in Fig. 1a-1c gezeigten Verstrebungen 27 und die Plattform 3 teilweise nicht dargestellt sind. In der Ruheposition 53 befindet sich das zweite Ende 15 der Plattform 3 bei der gezeigten Ausführungsform in Kontakt mit einem Untergrund 55, sodass eine Last (nicht dargestellt) auf die Plattform 3 gerollt, getragen oder geschoben werden kann. Auch wenn es in der gezeigten Variante der Fall ist, muss das Stützelement 7 und insbesondere die Rolle 45 am Fussende 43 des Stützelements 7 in der Ruheposition 53 der Plattform 3 nicht zwingenderweise in Kontakt mit dem Untergrund 55 stehen. Aus der Ruheposition 53 wird die Plattform 3 angehoben, indem das Antriebselement 9 den Abstand zwischen den Anlenkpunkten 29, 31 an der Plattform 3 und dem Stützelement 7 vergrössert, bis die Plattform die Arbeitsposition 57 (Figur 2c) erreicht. In der Arbeitsposition 57 befindet sich die Plattform 3 auf derselben Höhe wie eine Ladekantenhöhe Lh des Fahrzeugs 21. Ein möglicher Abstand 59 zwischen einer Ladekante 61 des Fahrzeugs 21 in der Arbeitsposition wird nach Möglichkeit vermieden oder so geringgehalten, dass er den Transport der Last nicht behindert oder gegebenenfalls mittels eines ausziehbaren (oder alternativ ausklappbaren oder ansteckbaren) Elementes (nicht dargestellt) überbrückt werden kann.

Durch die Anordnung der Anlenkpunkte 49, 51 und der Endbereiche 23, 25 wird das zweite Ende 15 der Plattform 3 aus der Ruheposition schneller angehoben als das erste Ende 13, sodass die Plattform möglichst schnell in eine annähernd horizontale Lage 63 kommt (siehe Figur 2b). Aus dieser annähernd horizontalen Lage 63 wird die Plattform 3 anschliessend annähernd parallel verschoben, bzw. in die Arbeitsposition 57 angehoben (siehe Figur 2c).

Für den Transport kann die erfindungsgemässe Lastenhebevorrichtung 1 aus der Arbeitsposition 57 in eine Transportposition 65 verschwenkt werden. Die Transportposition 65 ist in Fig. 3 gezeigt. In der Transportposition 65 ist die Lastenhebevorrichtung 1 über den Anlenkendbereich 19 am Fahrzeug 21 befestigt und mittels einer Fixiervorrichtung 67 fixiert.

## Patentansprüche

1. Lastenhebevorrichtung (1) zur Montage an einem Fahrzeug (21), umfassend:
eine von einer abgesenkten Ruheposition (53) in eine angehobene Arbeitsposition (57) und wieder zurück verbringbare Plattform (3) zur Aufnahme einer Last,
ein an der Plattform (3) schwenkbar gelagerten Anlenkhebel (5), welcher dazu bestimmt ist, mit einem Anlenkendbereich (19) am Fahrzeug (21) angelenkt zu sein,
ein an der Plattform (3) angebrachtes Stützelement (7) mit einem Fussende (43), welches zur Abstützung auf einem Untergrund (55) vorgesehen ist,
ein Antriebselement (9), welches dazu bestimmt ist, das Stützelement (7) aus einer der Ruheposition (53) der Plattform zugeordneten Ruhelage in eine Arbeitslage, in welcher das Fussende (43) auf dem Untergrund (55) abgestützt und die Plattform (3) in die Arbeitsposition (57) angehoben ist, zu verbringen,
**dadurch gekennzeichnet, dass** die Lastenhebevorrichtung ferner umfasst:
eine einerseits mit dem Anlenkhebel (5) und andererseits mit dem Stützelement (7) verbundenes Verbindungselement (11) zur Steuerung der Drehlage des Anlenkhebels (5) und der Schwenkposition der Plattform (3) in Abhängigkeit des Stützelements (7).

2. Lastenhebevorrichtung gemäss Anspruch 1, **dadurch gekennzeichnet, dass** der Anlenkhebel (5) als gerader Hebelarm, als Winkelhebel oder als eine Wippe ausgebildet ist.

3. Lastenhebevorrichtung gemäss einem der Ansprüche 1 oder 2, **dadurch gekennzeichnet, dass** der Anlenkhebel (5) als Torsionsrahmen ausgebildet ist.

4. Lastenhebevorrichtung gemäss einem der Ansprüche 1 bis 3, **dadurch gekennzeichnet, dass** das Stützelement (7) gelenkig, bevorzugt schwenkbar, mit der Plattform (3) verbunden ist.

5. Lastenhebevorrichtung gemäss einem der Ansprüche 1 bis 4, **dadurch gekennzeichnet, dass** das Verbindungselement (11) eine Gerade zwischen einem ersten Anlenkpunkt (23) der Plattform (3) am Anlenkhebel (5) und einem zweiter Anlenkpunkt (51) der Plattform (3) am Stützelement (7) kreuzt.

6. Lastenhebevorrichtung gemäss einem der Ansprüche 1 bis 5, **dadurch gekennzeichnet, dass** das Verbindungselement (11) längenverstellbar ist.

7. Lastenhebevorrichtung gemäss einem der Ansprüche 1 bis 6, **dadurch gekennzeichnet, dass** das Fussende (43) des Stützelementes (7) als Rolle (45) ausgebildet ist.

8. Lastenhebevorrichtung gemäss einem der Ansprüche 1 bis 7, **dadurch gekennzeichnet, dass** die Lastenhebevorrichtung (1) lediglich ein Stützelement (7) umfasst.

9. Lastenhebevorrichtung gemäss einem der Ansprüche 1 bis 8, **dadurch gekennzeichnet, dass** das Antriebselement (9) bevorzugt als hydraulischer Zylinder, pneumatischer Zylinder oder als ein Getriebe, insbesondere ein Spindelgetriebe ausgebildet ist.

10. Lastenhebevorrichtung gemäss einem der Ansprüche 1 bis 9, **dadurch gekennzeichnet, dass** das Antriebselement (9) das Stützelement (7) und/oder den Anlenkhebel (5) antreibt.

11. Lastenhebevorrichtung gemäss einem der Ansprüche 1 bis 10, **dadurch gekennzeichnet, dass** der Anlenkendbereich (19) am Fahrzeug (21) ein Anhängerkupplungsrahmen ist.

12. Lastenhebevorrichtung gemäss einem der Ansprüche 1 bis 11, **dadurch gekennzeichnet, dass** die Plattform (3) in eine wenigstens annähernd vertikal zur Arbeitsposition (57) liegende Transportposition (65) verbringbar ist, vorzugsweise durch Ausführen einer Schwenkbewegung um eine rechtwinklig zur Längsachse L der Plattform (3) verlaufende Schwenkachse.

13. Lastenhebevorrichtung gemäss einem der Ansprüche 1 bis 12, **dadurch gekennzeichnet, dass** sie aus einem Material besteht, das aus der Gruppe bestehend aus Metall insbesondere Stahl, Aluminium oder Inox-Chromstahl; Holz; Kohlenstoffverbundstoffe; Glasfaserverbundstoffe; Kunststoffe und Mischungen davon ausgewählt ist.

14. Lastenhebevorrichtung gemäss einem der Ansprüche 1 bis 13, **dadurch gekennzeichnet, dass** die Plattform (3) eine Aussparung aufweist zur Aufnahme des Stützelements (7) in dessen Ruhelage (53).

15. Fahrzeug mit einer Lastenhebevorrichtung gemäss einem der vorherigen Ansprüche.

## Claims

1. A load-lifting device (1) for mounting on a vehicle (21), comprising:
a platform (3) which can be moved from a lowered rest position (53) into a raised working position (57) and back again in order to receive a load,
a linking lever (5) which is pivotably supported on the platform (3) and which is intended to be articulated to the vehicle (21) by means of a linking end region (19),
a support element (7) which is fitted to the platform (3) and which has a base end (43) which is provided for support on a substrate (55),
a drive element (9) which is intended to move the support element (7) from a rest position which is associated with the rest position (53) of the platform into a working position in which the base end (43) is supported on the substrate (55) and the platform (3) is raised into the working position (57), and
a connection element (11) which is connected, on the one hand, to the linking lever (5) and, on the other hand, to the support element (7) in order to control the rotation position of the linking lever (5) and the pivot position of the platform (3) in accordance with the support element (7).

2. The load linking device as claimed in claim 1, **characterized in that** the linking lever (5) is constructed as a linear lever arm, as an angle lever or as a rocker.

3. The load-lifting device as claimed in either claim 1 or claim 2, **characterized in that** the linking lever (5) is in the form of a torsion frame.

4. The load-lifting device as claimed in one of claims 1 to 3, **characterized in that** the support element (7) is connected to the platform (3) in an articulated, preferably pivotable manner.

5. The load-lifting device as claimed in one of claims 1 to 4, **characterized in that** the connection element (11) intersects a straight line between a first link location (23) of the platform (3) to the linking lever (5) and a second link location (51) of the platform (3) to the support element (7).

6. The load-lifting device as claimed in one of claims 1 to 5, **characterized in that** the connection element (11) is adjustable in terms of length.

7. The load-lifting device as claimed in one of claims 1 to 6, **characterized in that** the base end (43) of the support element (7) is in the form of a roller (45).

8. The load-lifting device as claimed in one of claims 1 to 7, **characterized in that** the load-lifting device (1) comprises only one support element (7).

9. The load-lifting device as claimed in one of claims 1 to 8, **characterized in that** the drive element (9) is preferably in the form of a hydraulic cylinder, pneumatic cylinder or a gear mechanism, in particular a spindle gear.

10. The load-lifting device as claimed in one of claims 1 to 9, **characterized in that** the drive element (9) drives the support element (7) and/or the linking lever (5).

11. The load-lifting device as claimed in one of claims 1 to 10, **characterized in that** the linking end region (19) on the vehicle (21) is a trailer coupling frame.

12. The load-lifting device as claimed in one of claims 1 to 11, **characterized in that** the platform (3) can be moved into a transport position (65) which is located at least substantially vertically with respect to the working position (57), preferably by carrying out a pivot movement about a pivot axis which extends at right-angles with respect to the longitudinal axis L of the platform (3).

13. The load-lifting device as claimed in one of claims 1 to 12, **characterized in that** it comprises a material which is selected from the group comprising metal, in particular steel, aluminum or stainless chromium steel; wood; composite carbon materials, composite glass fiber materials; plastics materials and admixtures thereof.

14. The load-lifting device as claimed in one of claims 1 to 13, **characterized in that** the platform (3) has a recess for receiving the support element (7) in the rest position (53) thereof.

15. A vehicle having a load-lifting device as claimed in one of the preceding claims.

## Revendications

1. Dispositif de levage de charge (1) destiné à être monté sur un véhicule (21), comprenant :
une plate-forme (3) pouvant être déplacée d'une position de repos abaissée (53) à une position de travail relevée (57) et inversement, pour recevoir une charge,
un levier d'articulation (5) monté pivotant sur la plate-forme (3) et destiné à être articulé sur le véhicule (21) par une zone d'extrémité d'articulation (19),
un élément d'appui (7) monté sur la plate-forme (3) et comportant une extrémité de pied (43), qui est prévu pour prendre appui sur un sol (55),
un élément d'entraînement (9) destiné à faire passer l'élément d'appui (7) d'une position de repos associée à la position de repos (53) de la plate-forme à une position de travail dans laquelle l'extrémité de pied (43) est en appui sur le support (55) et la plate-forme (3) est soulevée dans la position de travail (57), **caractérisé en ce que** le dispositif de levage de charge comprend en outre :
un élément de liaison (11) relié d'une part au levier d'articulation (5) et d'autre part à l'élément d'appui (7) pour commander la position de rotation du levier d'articulation (5) et la position de pivotement de la plate-forme (3) en fonction de l'élément d'appui (7).

2. Dispositif de levage de charges selon la revendication 1, **caractérisé en ce que** le levier d'articulation (5) est conçu comme un bras de levier droit, comme un levier coudé ou comme une bascule.

3. Dispositif de levage de charges selon l'une des revendications 1 ou 2, **caractérisé en ce que** le levier d'articulation (5) est conçu comme un cadre de torsion.

4. Dispositif de levage de charges selon l'une des revendications 1 à 3, **caractérisé en ce que** l'élément d'appui (7) est relié de manière articulée, de préférence de manière pivotante, à la plate-forme (3) .

5. Dispositif de levage de charges selon l'une des revendications 1 à 4, **caractérisé en ce que** l'élément de liaison (11) croise une droite entre un premier point d'articulation (23) de la plate-forme (3) sur le levier d'articulation (5) et un deuxième point d'articulation (51) de la plate-forme (3) sur l'élément d'appui (7).

6. Dispositif de levage de charges selon l'une des revendications 1 à 5, **caractérisé en ce que** l'élément de liaison (11) est réglable en longueur.

7. Dispositif de levage de charges selon l'une des revendications 1 à 6, **caractérisé en ce que** l'extrémité de pied (43) de l'élément d'appui (7) est conçue comme un rouleau (45).

8. Dispositif de levage de charges selon l'une des revendications 1 à 7, **caractérisé en ce que** le dispositif de levage de charges (1) ne comprend qu'un seul élément d'appui (7).

9. Dispositif de levage de charges selon l'une des revendications 1 à 8, **caractérisé en ce que** l'élément d'entraînement (9) est de préférence un cylindre hydraulique, un cylindre pneumatique ou un engrenage, en particulier un engrenage à vis.

10. Dispositif de levage de charges selon l'une des revendications 1 à 9, **caractérisé en ce que** l'élément d'entraînement (9) entraîne l'élément d'appui (7) et/ou le levier d'articulation (5).

11. Dispositif de levage de charge selon l'une des revendications 1 à 10, **caractérisé en ce que** la zone d'extrémité d'articulation (19) sur le véhicule (21) est un cadre d'attelage de remorque.

12. Dispositif de levage de charges selon l'une des revendications 1 à 11, **caractérisé en ce que** la plate-forme (3) peut être amenée dans une position de transport (65) au moins approximativement verticale par rapport à la position de travail (57), de préférence en exécutant un mouvement de pivotement autour d'un axe de pivotement perpendiculaire à l'axe longitudinal L de la plate-forme (3).

13. Dispositif de levage de charges selon l'une quelconque des revendications 1 à 12, **caractérisé en ce qu'**il est réalisé en un matériau choisi dans le groupe constitué de métal, notamment acier, aluminium ou acier inoxydable-chrome; bois; composites à base de carbone; composites à base de fibres de verre; plastiques et leurs mélanges.

14. Dispositif de levage de charges selon l'une des revendications 1 à 13, **caractérisé en ce que** la plate-forme (3) présente un évidement destiné à recevoir l'élément d'appui (7) dans sa position de repos (53).

15. Véhicule équipé d'un dispositif de levage de charge selon l'une quelconque des revendications précédentes.
